# EUROPEAN PATENT SPECIFICATION

(11) **EP 1 325 088 B1**
(45) Date of publication and mention of the grant of the patent: **07.03.2007**
(21) Application number: 01985720.0
(22) Date of filing: 17.09.2001
(51) Int. Cl.: C09D 5/02, C08F 265/06, C08F 2/22

(54) **AQUEOUS DISPERSION OF ADDITION POLYMER PARTICLES**
WÄSSRIGE DISPERSION von ADDITIONSPOLYMERTEILCHEN
DISPERSION AQUEUSE DEs PARTICULES D'UN POLYMERE D'ADDITION

(30) Priority: 26.09.2000 GB 0023514
(43) Date of publication of application: 09.07.2003
(73) Proprietor: Imperial Chemical Industries Plc., London W1U 3AN (GB)
(72) Inventor: Williams, Neal St. John, Warfield Berkshire RG42 3JN (GB); Downing, Stephen Barry, High Wycombe Buckinghamshire HP13 6QP (GB)
(74) Representative: Cooper, Alan Victor
(86) International application number: PCT/EP2001/010864
(87) International publication number: WO 2002/026895

(56) References cited:
- EP-A- 0 300 612
- DE-A- 1 469 837
- US-A- 4 427 819
- US-A- 4 876 313
- US-A- 4 886 852
- US-A- 5 451 641
- US-A- 5 889 101
- DATABASE WPI Section Ch, Derwent Publications Ltd., London, GB; Class A00, AN 1968-38628Q XP002154911 & SU 226 141 A (VL KUZNETSOV (LEBEDEV SYNTH RUBBER R)

## Description

This invention relates to an aqueous dispersion of particles of an addition polymer of ethylenically unsaturated monomers, to a process for making the dispersion and to compositions containing the dispersions, especially a coating composition and an adhesive composition.

The continuing drive to reduce solvent emissions in many products, such as coating compositions and adhesives formulated at least in part using dispersions of polymer particles, has focussed attention on waterborne polymer particles, that is to say polymers which can be carried in water or mixtures of water and water miscible organic solvent where the water is the predominant carrier liquid. In this way potentially harmful solvents can be totally or substantially replaced by water. A particular class of such polymers is the so called emulsion (also known as latex) polymers made by emulsion polymerisation. Typically such a process involves the addition polymerisation of substantially water immiscible ethylenically unsaturated monomers using a water soluble polymerisation initiator in water. On raising the temperature, polymerisation takes place in the water phase producing substantially water insoluble polymer which, as polymerisation proceeds, increases in molecular weight until it becomes completely insoluble in the water and consequently precipitates to form a particle. In order to make such polymers as stable dispersions it is well known that water soluble surfactants are required to emulsify the monomers to be polymerised and subsequently to stabilise the resulting polymer particles as they are formed, otherwise the polymer particles will form coarse agglomerates, which cannot be formulated into useful products. Typical water soluble surfactants used are low molecular weight ionic or non ionic molecules having a hydrophobic and hydrophilic portion. Unfortunately, when the dispersion is converted to dried formulated products, for example as in the case of coatings and adhesives such water soluble surfactants remain in the composition resulting in poor resistance to water and humidity and contributing to flash rusting when applied directly to ferreous metals.

An attempt to overcome the poor water resistance was disclosed by United States patent specification US 5,889,101 issued in 1999. US 5,889,101 discloses a method whereby as a first stage a polymeric protective colloid of weight average molecular weight of at least 20,000 is made by free radical polymerisation in solvent, followed by a second stage polymerisation of monomers in the presence of the protective colloid to form a stable polymer dispersion which is free of low molecular weight surfactant. US 5,889,101 cautions against the use of large amounts of crosslinking species, in this case particular types of multi-unsaturated monomers, when making the protective colloid and in particular teaches the use of no more than 0.2 wt % of them presumably to avoid the known risk of gelling. This results in only modest water resistance. This level of water resistance remains inadequate in some critical applications such as adhesives and coatings, especially paint compositions for painting motor vehicles (especially cars). US 4,886,852 discloses a non-aqueous dispersion (NAD) stabilised by a copolymer which is prepared by copolymerising a singly unsaturated alkoxysilane group containing vinyl monomer. The NAD is converted to an aqueous dispersion by vacuum distillation. US 4,427,819 is concerned with finger rub stability of dispersions. It discloses aqueous polymer dispersions stabilised by a thin layer of a copolymer having chemically bound pH independent anionic groups and at least one other water-insensitive reactive functional group, the functional group being used to graft the copolymer onto surface of the polymer. particle.

It has now been discovered that highly water resistant, stable aqueous dispersions of addition polymer particles can be made without using surfactants. This is achieved by using stabilising copolymers containing amounts of crosslinking species which are significantly higher than previously proposed. Such dispersions when formulated into coatings result in substantially improved water resistance and improved flash rusting on bare steel.

Accordingly, this invention provides a surfactant-free aqueous dispersion of particles of an addition polymer of ethylenically unsaturated monomers which dispersion also contains a stabilising copolymer of
a) weak acid containing species of pKa from 3 to 6
b) multi-unsaturated crosslinking species and
c) ethylenically singly unsaturated comonomers
wherein said copolymer contains at least 0.3% by weight of crosslinking species and is selected to have an alpha parameter derived from the Mark-Houwink equation of from 0.3 to 0.6 and wherein the dispersion of particles of addition polymer is made in the presence of the stabilising polymer.

It is believed that the presence of the crosslinking species results in a degree of copolymer chain branching and/or crosslinking during copolymerisation and reaction to form a branched stabilising copolymer. A measure of this branching is the alpha parameter. This is determined in tetrahydrofuran (THP) at 23°C using the technique described in detail later in the specification. The alpha parameter is indicative of the molecular structure of the stabilising copolymer and under specified conditions of solvent and temperature alpha indicates the degree of branching. It is thought that too low a value of the alpha parameter means that the stabilising copolymer is so highly branched that it behaves as a hard sphere, rendering it insufficiently dispersible in water and consequently inadequate as a stabiliser in an emulsion polymerisation, whilst too high a value of alpha means that the stabilising copolymer is easily extractable by water and hence the water resistance of the dried formulations is poor.

Preferably the stabilising copolymer has an alpha parameter derived from the Mark-Houwink equation of from 0.3 to 0.5.

The invention also provides a stabilising copolymer for use in the aqueous dispersions which is a copolymer of;
a) weak acid containing species of pKa from 3 to 6
b) multi-unsaturated crosslinking species and
c) ethylenically singly unsaturated comonomers
wherein the stabilising copolymer contains at least 0.3% by weight of crosslinking species.

Preferably, the stabilising copolymer is selected so as to have an alpha parameter derived from the Mark-Houwink equation of from 0.3-0.6 and more preferably from 0.3 to 0.5.

The crosslinking species referred to in b) is any species capable of reacting with the monomers of a) and c) to produce crosslinks and/or branches in the stabilising copolymer.

Suitable examples of such crosslinking species include ethylenically multi-unsaturated monomers; that is to say, monomers that have more than one ethylenic unsaturation which can copolymerise with the other ethylenically unsaturated comonomers so as to form the crosslinks and/or branches described above. Such monomers are known as crosslinking comonomers. Examples of suitable such crosslinking comonomers include allyl methacrylate, vinyl acrylate, divinyl benzene, ethylene glycol dimethacrylate, di-allyl phthalate, hexane diol diacrylate, trimethylol propane triacrylate, penta erythritol triallyl ether, dicyclopentenyl oxyethyl methacrylate and glycerol triacrylate.

Preferably the crosslinking comonomer contains two ethylenically unsaturated bonds.

The most preferred crosslinking species is allyl methacrylate.

The crosslinking species referred to in b) above preferably constitutes from 0.3 to 10%, more preferably from 0.5 to 8% and most preferably from 1 to 7% by weight of the stabilising copolymer.

The acid containing species referred to in a) above are species containing weak acid groups. Such weak acid containing species include ethylenically unsaturated monomers having an acid group or its anhydride. Examples of suitable weak acid containing monomers are acrylic acid, methacrylic acid, beta carboxy ethyl acrylate, itaconic acid and crotonic acid. Examples of suitable ethylenically unsaturated acid anhydride containing monomers include succinic anhydride, maleic anhydride, and methacrylic anhydride.

Preferably the acid containing species comprises ethylenically unsaturated acid and/or acid anhydride monomers. More preferably the acid containing species of a) contains a carboxylic acid group or its anhydride. Most preferably the acid containing species is methacrylic acid.

The acid containing species referred to in a) above constitute from 2 to 30%, preferably from 5 to 25% and more preferably from 6 to 19% by weight of the stabilising copolymer.

The stabilising copolymer optionally contains ethylenically singly unsaturated comonomers as referred to in c) above. This allows the other characteristics such as hardness, cost, reactivity and solubility to be adjusted. Using the nomenclature (meth)acrylate to represent methacrylate and acrylate equally, examples of such comonomers are (meth)acrylic acid esters, amides and nitriles, vinyl monomers and vinyl esters.

Examples of (meth)acrylic acid esters are alkyl esters, particularly methyl (meth)acrylate, butyl (meth)acrylate, ethyl(meth)acrylate, ethylhexyl (meth)acrylate, propyl (meth)acrylate, lauryl (meth)acrylate, isobornyl (meth)acrylate, t-butyl (meth)acrylate, cyclohexyl (methacrylate), glycidyl methacrylate, hydroxyethyl(meth)acrylate, hydroxybutyl(meth)acrylate, hydroxypropyl(meth)acrylate, and poly(alkylene oxide) esters such as poly ethylene glycol methacrylate. Examples of nitriles are (meth)acrylonitrile. Examples of amide monomers include (meth)acrylamide. Examples of vinyl monomers are styrene and alpha methyl styrene. Examples of vinyl esters are vinyl C₁₋₄ alkanoate esters, especially vinyl acetate, vinyl propionate and vinyl butyrate; other vinyl esters include the vinyl versatates, which are the vinyl esters of versatic acid¹. Examples of useful hydrophilic comonomers are hydroxyethylacrylate and alkoxy poly(oxyethylene)ₙ (meth)acrylate, in which the ₙ represents the molecular weight of the poly(oxyethylene) group and is typically from 500 to 3000.

Preferred monomers are hydroxy ethyl acrylate, methoxy poly(oxyethylene)₂₀₀₀ methacrylate, butyl acrylate and methyl methacrylate

The further ethylenically singly unsaturated comonomers referred to in c) above preferably constitute from 60 to 97.7%, more preferably from 67 to 94.5% and most preferably from 74 to 93% by weight of the stabilising copolymer.

The weight average molecular weight of the polymeric stabiliser is preferably 25,000 to 750,000, more preferably 40,000 to 500,000 and most preferably 40,000 to 200,000 as measured by Right Angle Laser Light Scattering (RALLS) as referred to later in the specification.

Preferably the glass transition temperature (Fox Tg) of the stabilising copolymer is from -40 to +150°C as calculated using the Fox equation.

The dispersed polymer particles may be particles of any addition polymer (including copolymers) of ethylenically unsaturated monomers.

Using the nomenclature (meth)acrylate to represent methacrylate and acrylate equally, examples of such ethylenically unsaturated monomers are acid and/or acid anhydride monomers of the type useful in making the stabilising copolymer, (meth)acrylic acid esters, amides and nitriles, vinyl monomers, vinyl esters and crosslinking monomers. Examples of (meth)acrylic acid esters are alkyl esters, particularly methyl (meth)acrylate, butyl (meth)acrylate, ethyl(meth)acrylate, propyl (meth)acrylate, 2-ethyl hexyl acrylate
¹ Versatic acid is a mixture of aliphatic monocarboxylic acids each containing an average of 9,10 or 11 atoms and is commercially available from the Shell Company at Carrington, England and alkoxy poly(oxyethylene)ₙ (meth)acrylate. Examples of vinyl monomers are styrene and alpha methyl styrene. Examples of vinyl esters are vinyl C₁₋₄ alkanoate esters, especially vinyl acetate, vinyl propionate, vinyl butyrate and vinyl versatate. The monomers may also be crosslinking species of the same type which are useful in making the stabilising copolymer and they are preferably present in amounts of from 1 to 5 % by weight of the particle.

Preferred monomers are butyl acrylate, methyl methacrylate, butyl methacrylate, styrene, 2-ethyl hexyl acrylate, methoxy poly(oxyethylene)₂₀₀₀ methacrylate and allyl methacrylate.

Preferably the Fox Tg of the polymer particles is from -40 to +150°C in order to give easily applied coating compositions and adhesives.

Preferably the diameter of the polymer particles is from 10 to 500 nanometers, more preferably from 10 to 300 nanometers and most preferably from 10 to 100 nanometers. Particles of the lowest size are most preferred as they produce dried films, especially coatings, of greatest clarity. This is particularly advantageous in dyed or pigmented formulations where the greater clarity allows a wider and brighter range of colours to be produced.

The weight ratio of stabilising copolymer to stabilised polymer is in the range from 5:95 to 95:5, preferably from 15:85 to 85:15, more preferably from 25:75 to 75 to 25.

The stabilising copolymer is used in the preparation of the aqueous dispersions of addition polymer particles.

The stabilising copolymer can be prepared using known free radical polymerisation methods carried out in solvents and initiated by free radicals at elevated temperature.

Suitable solvents are good solvents for the particular stabilising copolymer composition in question. By good solvent is meant that the solvent readily dissolves the stabilising copolymer composition. In practice it has been found that suitable solvents include organic solvents, preferably water miscible solvents or mixtures thereof. Examples of such solvents are 2-butoxy ethanol, propylene glycol monomethyl ether, 1-methoxy 2-propanol, 2,2,4-trimethyl 1,3-pentanediol monoisobutyrate and n-butanol. A preferred solvent is 2-butoxy ethanol as it is compatible with many polymers and is soluble in water.

By selecting such good solvents or solvent mixtures it is possible to make the stabilising copolymer at commercially useful solids content of about 50% at a sufficiently low viscosity to enable easy handling. Inevitably, there is a practical upper limit to the solids content beyond which the viscosity is so high, or it gels, that the solution of stabilising copolymer is, for all practical purposes unhandleable. This can only be determined by experiment and depends not only on the choice of solvent or solvent mixture, but also on the molecular weight of the stabilising copolymer, level of crosslinking monomer and total non volatile (nv) content.

Suitable free radical initiators include peroxides, peresters and azobiscarbonitriles. Suitable examples of the peroxide initiators include hydrogen peroxide, t-butyl hydroperoxide, di-t-butyl peroxide, benzoyl peroxide and di-t-amylperoxide. Suitable examples of the perester initiators include butylperoxy-2-ethyl hexanoate and t-butyl peracetate. A suitable nitrile initiator is 2,2' azobis (2 methylbutyronitrile). Of course, initiators containing acid groups can be used as described above in relation to the acid containing species of the stabilising copolymer. The amount of initiator used is typically from 0.1 to 7% by weight on monomers and preferably 0.5 to 5% by weight and most preferably from 0.5 to 2% by weight.

A suitable method to introduce the monomer mixture and the initiator into the reactor vessel is to add them over a period of from 2 to 6 hours, preferably from 2 to 4 hours.

The polymerisation temperature is typically from 70 to 150°C and preferably from 80 to 140°C.

The process for the preparation of the stable aqueous dispersion of addition polymer particles is one where the particles of addition polymer are made by a polymerisation carried out in the presence of the stabilising copolymer.

In order for the stabilising copolymer to efficiently emulsify the monomer mixture to be polymerised and to stabilise the polymer particles formed in the aqueous phase, the acid groups on the polymeric stabiliser are preferably at least partially neutralised by the addition of a base. Examples of suitable bases are alkali metal hydroxides and amines. Amines are most preferred as they have a minimum adverse affect on the properties of the dried formulated product, such as water resistance. Suitable amines include ammonia and primary, secondary and tertiary amines such as triethylamine and dimethyl ethanolamine.

Following the addition of base, the solution of stabilising copolymer may be added to water in a reactor vessel and the monomer mixture introduced in the presence of a free radical polymerisation initiator.

A preferred process is to add the monomer mixture and the initiator into the reactor vessel over a period of from 2 to 6 hours, preferably from 2 to 4 hours. Preferably the monomer mixture is emulsified prior to addition to the reactor by mixing with water in the presence of a portion of the stabilising copolymer. The amount of stabilising copolymer used is typically from 0.01 to 20% by weight on monomer mixture and preferably from 0.5 to 10% by weight and most preferably from 1 to 5% by weight.

The polymerisation is carried out by heating the mixture to a temperature typically from 30 to 98°C, preferably from 40 to 90°C.

Suitable emulsion polymerisation initiators include peroxides such as hydrogen peroxide and tertiary butyl hydroperoxide, persulphates such as potassium persulphate and ammonium persulphate, and redox initiator combinations such as ascorbic acid and hydrogen peroxide. Optionally, metal salts such as copper, chromium and iron salts can be added when redox pairs are used.

Preferably the initiator is the redox combination of hydrogen peroxide and ascorbic acid as this enables the polymerisation to be carried out at reduced temperature and results in reduced fouling of the reactor vessel requiring less frequent cleaning.

The process is particularly useful for making composite dispersion polymer microparticles where the stabilising copolymer is mainly found on the outside of the particle. It is thought that this is because the stabilising copolymer prefers to be attached to a surface rather than exist in solution. During the polymerisation to form the dispersion polymer microparticles, it is further thought that the stabilising copolymer migrates to the polymer particle surface to form the mantle with the polymer particle forming the core.

Important applications of the aqueous dispersion of polymer particles of this invention are in the field of adhesives, especially laminating adhesives and pressure sensitive adhesives; coatings suitable for painting wood, metal, plastics, walls, floors, ceilings, vehicles including motor vehicles, bicycles; the coatings may be formulated as primers, undercoats and topcoats including basecoats and clearcoats for painting vehicles.

Accordingly the invention also provides an aqueous coating composition wherein the composition contains an aqueous dispersion of polymer particles as described above.

The coating composition can also contain other ingredients that are standard for coatings such as pigments, rheological modifiers, dispersants, extenders, crosslinking agents, anti foams, flow aids and biocides.

The pigment can be any pigment or mixture of pigments suitable for use in an aqueous composition such as a solid colour pigment, a metallic pigment or a pearlescent pigment Preferably the pigment is a metallic pigment, especially aluminium flake pigment, or a pearlescent pigment or a transparent pigment or a mixture of these optionally with other pigments.

Examples of suitable crosslinking agents are polyisocyanates and aminoplast resins such as melamine formaldehydes and urea formaldehydes as described above in reference to the crosslinking species. These can react with suitable chemical moieties on the particles and/or the stabilising copolymer, such as hydroxyl groups so as to form a well integrated film structure of greater mechanical strength.

The coating compositions can be prepared by standard methods for example by mixing or high speed stirring with pigments and other ingredients that are standard for coatings.

The coating compositions can be applied by standard techniques for example by spraying or brushing.

Where the aqueous dispersion of polymer particles is used in an adhesive composition, said adhesive composition may also contain at least one component selected from the group consisting of tackifiers, solvents and plasticisers.

### Determination of the Mark-Houwink alpha parameter.

The Mark-Houwink alpha parameter is obtained from a plot of log(intrinsic viscosity) versus log(molecular weight) obtained from a single polydispersed polymer sample. This is achieved via gel-permeation chromatography (GPC) with triple detection (differential refractive index, viscosity and right-angle light scattering (RALLS)). The sample is firstly separated according to molecular size by the GPC column and then each slice of the resulting distribution is analysed for intrinsic viscosity and molecular weight by processing of the three detector signals in combination. The approximately linear region of the plot is fitted to a straight line and alpha derived from the slope. Where two approximately linear regions are seen the upper one is used for alpha.

The GPC system comprises a suitable column to separate the polymer (two 30cm PLGEL 10 micron mix B available from Polymer Laboratories Ltd, Shropshire, UK) and a triple detection system available from Viscotek Corporation (Houston, Texas, 77060, USA). The detector signals are processed using Viscotek Trisec' software. The eluent used is tetrahydrofuran and the system is maintained at ambient temperature (23+/-3°C). Other conditions of sample concentration, injection volume and eluent flow rate are adjusted to give good chromatographic separation (here the conditions are 10mg/ml of polymer, 100microlitre injection volume, 1.0 ml/min eluent flow rate). Before each series of samples a polystyrene standard of narrow molecular weight distribution is injected in order to adjust for inter-detector delays, to normalise the refractive index and light-scattering signals and to calibrate the total refractive index signal for refractive index increment dn/dc. A polystyrene standard of wide molecular distribution is also run as a control sample to ensure that the correct molecular weight moments and alpha value (0.71) are produced by the system.

The Trisec software is used as instructed by the manufacturers to obtain the Mark-Houwink plot. It uses an iterative method based on the Fox-Flory equation to calculate an accurate molecular weight from the RALLS signal, using intrinsic viscosity to provide a correction for the finite angle used. It is necessary to select a model for the particle scattering function to do this. Here the random coil approximation is chosen. A single point method is used to derive intrinsic viscosity from viscosity and concentration for each slice.

The invention is further illustrated by the following Examples of which Examples A and B are comparative.

The tradenames listed below are used in the examples to denote the following:
DMAE is dimethylaminoethanol.
Vazo^{™} 67 is 2,2 azobis(2-methyl butyronitrile) initiator available from DuPont, Wilmington, USA.
Trigonox^{™} 21S is t-butyl peroxyethyl hexanoate initiator available from Akzo Nobel Chemicals, Gillingham, Kent, England.
Trigonox^{™} BPIC is tertiary butyl peroxy isopropyl carbonate initiator available from Akzo Nobel Chemicals, Gillingham, Kent, England.
Triton^{™} X405 is a non-ionic wetting agent available from Dow Europe, Horgen, Switzerland.
Orotan^{™} QR681M is pigment dispersant available from Rohm and Haas,
Bevaloid^{™} 6681 is an antifoam available from Rhodia Europe, France.
Microtalc^{™} AT Extra is available from Omya, Matlock, Derbyshire, UK.
Tioxide^{™} TR 92 is available from Huntsman Tioxide, London W14 0QL, UK.
Delaphos^{™} 2M is a zinc phosphate anticorrosive pigment available from Trident Alloys, Walsall, WS3 2XW, UK.
Neocryl^{™} XK62 is available from Neo Resins, Waalwijk, The Netherlands.
Pliotec^{™} LS 1 is available from Goodyear Chemicals, Courtaboeuf, France
Aquamac^{™} 705 is available from McWhorter Technologies, Illinois, USA
Texanol^{™} is available from Eastman Chemical Co, Kingsport, Tennessee, USA

### Example 1: Preparation of Stabilising Copolymer containing crosslinking comonomer as the crosslinking species.

Example 1 describes the method used to make the stabilising copolymer 1 of the invention using the components listed in Table 1 below.

To a glass reactor equipped with an isomantle, an anchor stirrer, a glass condenser, and an injection port connected to two injection pumps was added the solvent and the temperature raised to 130°C under an atmosphere of nitrogen. To the reactor was added a mixture of ethylenically unsaturated monomers and initiator as specified in Table 1. The monomer mixture and initiator feed were added at a uniform rate over a period of three hours using the injection pumps whilst maintaining the reactor contents at 130°C. The first initiator spike was added 30 minutes after the end of the feed. The second initiator spike was added after a further 30 minutes. The initiator spikes are added to ensure that the monomers have essentially polymerised completely to leave only very low levels of unreacted monomer. The temperature was maintained at 130°C for a further hour and then allowed to cool to ambient temperature. Lastly, the contents were decanted to provide the stabilising copolymer.

### Example 2 and Comparative examples A and B

Example 2 and Comparative examples A and B were made using the ingredients listed in Table 1 according to the above method except that the temperature was reduced to 90°C in order to achieve similar weight average molecular weights. Examples 1 and 2 contain 1 and 0.4 weight % respectively of crosslinking co-monomer and comparative examples A and B contain 0 and 0.2 weight % respectively.

**Table 1 Composition and Characterisation of Stabilising Polymers**

| | **Stabilising Copolymer** | | **Comparative Stabilising Copolymer** | |
|---|---|---|---|---|
| | **1** | **2** | **A** | **B** |
| | **Wt(g)** | **Wt(g)** | **Wt(g)** | **Wt(g)** |
| **Solvent Charge** | | | | |
| 2-butoxy ethanol | 990.93 | 1436.49 | 1519.02 | 1436.49 |

| **Monomer Feed** | | | | |
|---|---|---|---|---|
| Butyl Acrylate | 1593.26 | 1248.99 | 1187.73 | 1252.02 |
| Hydroxy ethyl acrylate | 194.30 | 151.21 | 152.34 | 151.21 |
| Methacrylic acid | 136.01 | 105.85 | 106.62 | 105.85 |
| Allyl Methacrylate | 19.43 | 6.05 | | 3.02 |
| | | | | |

| **Initiator Feed** | | | | |
|---|---|---|---|---|
| 2 butoxy ethanol | 52.46 | 40.83 | 26.95 | 40.83 |
| Vazo 67 | 9.72 | 7.56 | 2.99 | 7.56 |
| | | | | |
| **Mop-up Initiator Spikes** | | | | |
| Trigonox 21S | 1.94 | 1.51 | | 1.51 |
| | | | | |
| Trigonox 21S | 1.94 | 1.51 | | 1.51 |
| | | | | |
| Trigonox BPIC | | | 2.17 | |
| | | | | |
| Trigonox BPIC | | | 2.17 | |
| | | | | |
| **Total** | **3000** | **3000** | **3000** | **3000** |
| | | | | |
| **Process temperature** | **130°C** | **90°C** | **90°C** | **90°C** |
| **Theoretical solids %** | **65** | **50** | **50** | **50** |
| **Viscosity (Pa.s)** | **1.5** | **0.7** | **0.6** | **0.62** |
| **Molecular weight (Mw)** | **41,920** | **47,400** | **46,510** | **42,060** |
| **Alpha parameter** | **0.42** | **0.63** | **0.69** | **0.64** |

Viscosity was measured using an ICI cone and plate viscometer at 10000 s⁻¹.

The low value of the alpha parameter for example 1 indicates that the stabilising copolymer is branched.

### Example 3: Preparation of the stable aqueous dispersion of addition copolymer particles using the stabilising copolymer of example 1

Example 3 describes the method used to make the aqueous dispersion of copolymer particles from components as specified in Table 2, using the stabilising copolymer of example 1.

To a glass reactor equipped with an anchor stirrer, a glass condenser, two injection ports each connected to an injection pump and fitted with a water bath are added in the following order, the stabilising copolymer, DMAE and demineralised (demin) water, comprising the reactor charge and the temperature raised to 50°C. Nitrogen is bubbled through the reactor charge (also known as sparging) for 30 minutes. During this period the monomer mixture is prepared by adding all the components except the hydrogen peroxide, in the order shown, to a container vessel. This monomer mixture is mixed for 15 minutes under high shear using a high shear Silverson homogeniser to produce a fine emulsion. The hydrogen peroxide is then stirred into the monomer mixture. At the end of the 30 minute nitrogen sparge the addition of the monomer mixture and the co-initiator feed is started, the addition being made over 3 hours at an even rate using the injection pumps. At the end of the feeds the temperature is maintained at 50°C for a further hour. The resulting aqueous dispersion of addition polymer particles is cooled to below 35°C and decanted.

### Example 4 and comparative examples C and D

The aqueous dispersions of example 4 and comparative examples C and D were made using the same process as indicated above except that the stabilising copolymers of examples 2,A and B respectively were used as specified in Table 2

**Table 2 Composition and Characterisation of Aqueous Dispersion Polymer Examples 3,4,C and D**

| | **Aqueous Dispersion Example Number** | | | |
|---|---|---|---|---|
| **Example** | **3** | **4** | **C** | **D** |
| **Material** | **Wt (g)** | **Wt (g)** | **Wt (g)** | **Wt (g)** |
| **Aqueous Charge** | | | | |
| Stabilising copolymer A | | | 389.58 | |
| Stabilising copolymer B | | | | 492.56 |
| Stabilising copolymer 2 | | 492.56 | | |
| Stabilising copolymer 1 | 521.13 | | | |
| DMAE | 14.91 | 14.21 | 14.49 | 14.21 |
| Demin water | 1547.67 | 1575.37 | 1653.83 | 1575.37 |
| | | | | |
| **Monomer Emulsion Feed** | | | | |
| Stabilising copolymer A | | | 43.29 | |
| Stabilising copolymer B | | | | 54.72 |
| Stabilising copolymer 2 | | 54.72 | | |
| Stabilising copolymer 1 | 57.89 | | | |
| DMAE | 1.65 | 1.58 | 1.61 | 1.58 |
| Methyl methacrylate | 154.53 | 154.93 | 157.90 | 154.93 |
| Butyl acrylate | 727.05 | 728.93 | 742.89 | 728.93 |
| Allyl Methacrylate | 27.29 | 27.36 | 27.89 | 27.36 |
| Demin water | 661.60 | 663.31 | 676.02 | 663.31 |
| Hydrogen peroxide | 4.82 | 4.83 | 4.93 | 4.83 |
| | | | | |
| **Co-Initiator Feed** | | | | |
| Ascorbic acid | 2.55 | 2.56 | 2.61 | 2.56 |
| DMAE | 1.28 | 1.28 | 1.30 | 1.28 |
| Demin water | 277.64 | 278.35 | 283.69 | 278.35 |
| | | | | |
| **Total** | **4000** | **4000** | **4000** | **4000** |
| | | | | |
| **Theoretical solids %** | **30** | **30** | **30** | **30** |
| **Particle Size (nm)** | **131** | **123** | **70.8** | **120** |
| **Coagulum(%)** | **None** | **None** | **None** | **None** |

The particle sizes were measured on an Coulter N4 Plus Dynamic Light Scattering machine. High shear viscosity was measured on an ICI viscometer and all lay between 14 and 22 mPa.s. Low shear viscosity was measured on a Brookfield viscometer using a No. 1 spindle at 6 rpm and all lay between 11 and 16 mPa.s.

### Water Spot Resistance Testing

The dispersions were drawn down using a 150 micron block spreader on glass panels and left to dry at 24°C for 2 days. A 1 ml drop of water was applied and covered with a plastic lid for 30 minutes. The films were then wiped dry with a tissue and assessed for whitening.

**Table 3. Water Spot Resistance Testing**

| **Dispersion Polymer** | **Stabilising copolymer composition** | **Result** |
|---|---|---|
| C | A | Very white |
| D | B | Slightly white |
| 3 | 1 | Unaffected |
| 4 | 2 | Very Slightly white |

### Examples 5 and 6: Preparation of further Stabilising Copolymer and Aqueous Dispersion of Addition polymer particles.

Example 5 is a stabilising copolymer made using the ingredients listed in Table 4 below according to the method of example 1.

**Table 4. Example 5**

| **Solvent Charge** | **Wt (g)** |
|---|---|
| 1-methoxy2-propanol | 1034.48 |
| | |

| **Monomer Feed** | |
|---|---|
| Styrene | 356.72 |
| Methyl Methacrylate | 332.82 |
| Butyl Acrylate | 648.16 |
| Hydroxy ethyl Acrylate | 178.36 |
| Allyl Methacrylate | 17.84 |
| Methacrylic acid | 249.70 |
| | |
| **Initiator Feed** | |
| 1-methoxy 2-propanol | 160.52 |
| Vazo 67 | 17.84 |
| | |

| **Mop-up Initiator Spikes** | |
|---|---|
| Trigonox 21S | 1.78 |
| | |
| Trigonox 21 S | 1.78 |
| | |
| **Process temperature** | **120°C** |
| **Theoretical solids %** | **60** |
| **Viscosity (Pa.s)** | **13.5** |
| **Molecular weight (Mw)** | **42020** |
| **Alpha parameter** | **0.52** |

The stabilising copolymer of example 5 was used in the preparation of the stable aqueous dispersion of addition polymer particles of example 6 made using the ingredients listed in Table 5 below. The same process is used as described in example 3 other than the polymerisation initiator being added as a single shot immediately prior to the monomer feed beginning and that four initiator spikes were added at 30 minute intervals to ensure the monomers had reacted.

**Table 5. Example 6**

| **Aqueous Charge** | **Wt(g)** |
|---|---|
| Stabilising Copolymer 5 | 188.87 |
| Ammonia solution (880) | 9.26 |
| Demin water | 411.08 |
| | |

| **Initiator shot prior to feed** | |
|---|---|
| Trigonox 21S | 2.60 |
| | |

| **Monomer Emulsion Feed** | |
|---|---|
| Butyl Acrylate | 9.89 |
| Butyl Methacrylate | 510.46 |
| Stabilising Copolymer 5 | 62.96 |
| Ammonia solution (880) | 3.09 |
| Demin water | 1198.20 |
| | |

| **Mop-up Spikes** | |
|---|---|
| Trigonox 21S | 0.65 |
| Trigonox 21S | 0.65 |
| Trigonox 21S | 0.65 |
| Trigonox 21S | 0.65 |
| | |
| **Process temperature** | **80°C** |
| **Theoretical Solids %** | **45** |
| **Particle size (nm)** | **139** |
| **Coagulum %** | **1.4** |

### Comparative Examples E, F and G

Three commercially available aqueous dispersions, each recommended for use in coatings where good water resistance and anti-corrosion properties are required, were selected. These are comparative examples E (comprising Pliotec LSI), F (comprising Aquamac 705) and G (comprising Neocryl XK 62). They are made using conventional stabilisers or surfactants; that is to say not of the invention

### Testing

The aqueous dispersion of example 6 was compared to Comparative examples E, F and G, by carrying out the tests described below. For each test the aqueous dispersions were either used neat or formulated into a coating composition in accordance with the procedure described below.

The results are shown in Table 6.

**Table 6**

| Aqueous | Flash | Water soak | | Exudate | Salt Bath | Salt Bath |
|---|---|---|---|---|---|---|
| dispersion | Rusting | 0hr | 16hr | | (Aq Disp) | (Primer) |
| **E** | NO | 5 | 5 | YES | 1 | Did not form coherent film |
| **F** | NO | 5 | 5 | NO | 1 | 2 |
| **G** | YES | 2 | 1 | NO | 5 | 5 |
| **6** | NO | 3 | 1 | NO | 3 | 2 |

The tests were carried out as described below.

Flash rusting - A quantity of each of the aqueous dispersions is poured over degreased, mild steel panels held at about 45°, any excess being allowed to run off. The presence or absence of surface rusting on each panel is assessed at 5 minutes after pouring.

Water Soak- To example 6 and comparative aqueous dispersions E, F and G was added 15 weight % on nv of Texanol (2,2,4-Trimethyl-1,3 pentanediol monoisobutyrate) and sufficient associative thickener Acrysol RM 2020 (available from Rohm and Haas) to achieve a viscosity of 0.2Pa.s (as measured at 10,000s⁻¹ using an ICI Cone and Plate viscometer). These clear coatings were block spread on degreased mild steel panels and allowed to dry for 1 week. The dry film weight was approximately 30µm. The coated panels were immersed in water at a temperature of 40°C for 10 days and assessed immediately after removal and also after being allowed to recover for16 hours, as indicated in the table by the 0 and 16 hr figures respectively.

The following scale is used to quantify the amount of whitening that the films suffer
1=Clear-unaffected
2=Slight blush
3=Blush/grey
4=White
5=White/opaque

The coated panels were also assessed for evidence of an oily/waxy exudate on the surface of the coating following the water soak test.

Salt Bath-Panels coated with thickened aqueous dispersions (Aq Disp) as above were also tested by immersing them for 24 hours in a 5wt % aqueous solution of sodium chloride solution at 23°C.

The following scale was used to quantify the amount of rusting that the films suffered.
1=Unaffected
2=Slight rusting
3=Moderate rusting
4=Heavy rusting
5=Heavy rusting and blisters

Comparative aqueous dispersions E, F and G and example 6 were converted to primer coatings H, I and J respectively, according to the formulations below, drawn down on degreased, bare mild steel panels to a dry film thickness of 60µm and immersed in the sodium chloride solution described above for 24 hours at 23°C. The same scale was used to assess the degree of rusting as for the thickened aqueous dispersions above.

**Table 7. Primer formulations**

| | **H** | **I** | **J** |
|---|---|---|---|
| | **Weight %** | **Weight %** | **Weight %** |
| **Millbase** | | | |
| Triton X-405 | 0.16 | 0.16 | 0.16 |
| Orotan QR681M | 0.92 | 0.92 | 0.92 |
| Bevaloid 6681 | 0.06 | 0.06 | 0.06 |
| Demineralised water (1) | 2.88 | 2.88 | 2.88 |
| Demineralised water (2) | 12.69 | 21.03 | 14.95 |
| Tioxide TR92 | 7.13 | 7.13 | 7.11 |
| Microtalc AT extra | 15.41 | 15.41 | 15.36 |
| Delaphos 2M | 5.99 | 5.99 | 5.97 |

| **Aqueous Dispersion** | | | |
|---|---|---|---|
| G | 51.5 | | |
| F | | 43.21 | |
| 6 | | | 49.35 |

| **Cosolvent** | | | |
|---|---|---|---|
| Texanol | 3.24 | 3.24 | 3.23 |

The millbase was prepared by grinding the ingredients in Table 7 in a high speed disperser, known as a Dispermat, for 30 minutes and then gradually adding the aqueous dispersion and cosolvent as indicated whilst stirring.

The primer formulation for aqueous dispersion E is not shown as it would not film form when applied to the panel and hence was not tested.

Referring to Table 6, the best overall performing aqueous dispersion across the range of tests is example 6. In particular, its performance in all areas is at least acceptable and generally excellent without any test results being poor. This is in complete contrast to the test results for the comparative aqueous dispersions which each have unacceptable properties making them very difficult to formulate practical compositions of adequate performance.

## Claims

1. A surfactant-free aqueous dispersion of particles of an addition polymer of ethylenically unsaturated monomers which dispersion also contains a stabilising copolymer of
a) weak acid containing species of pKa from 3 to 6
b) multi-unsaturated crosslinking species and
c) ethylenically singly unsaturated comonomers
wherein said copolymer contains at least 0.3% of crosslinking species and is selected to have an alpha parameter derived from the Mark-Houwink equation of from 0.3 to 0.6 and wherein the dispersion of particles of addition polymer is made in the presence of the stabilising copolymer.

2. An aqueous dispersion according to Claim 1 or 2 wherein the weight average molecular weight of the stabilising copolymer is from 25,000 to 750,000.

3. An aqueous dispersion according to any one of the preceding Claims wherein the crosslinking species of b) are crosslinking comonomers selected from allyl methacrylate, vinyl acrylate, divinyl benzene, ethylene glycol dimethacrylate, di-allyl phthalate, hexane diol diacrylate, trimethylol propane triacrylate, penta erythritol triallyl ether, dicyclopentenyl oxyethyl methacrylate and glycerol triacrylate.

4. An aqueous dispersion according to any one of the preceding Claims wherein the crosslinking species of b) are crosslinking comonomers which contain only two ethylenically unsaturated bonds.

5. An aqueous dispersion according to any one of the preceding Claims wherein the acid containing species of a) contains a carboxylic acid group or its anhydride.

6. An aqueous dispersion according to any one of the preceding Claims wherein the acid containing species of a) constitute from 2 to 30% by weight of the stabilising copolymer.

7. An aqueous dispersion according to Claim 6 wherein the acid containing species of a) are selected from the group consisting of acrylic acid, methacrylic acid, beta carboxy ethyl acrylate, itaconic acid, crotonic acid, sodium styrene sulphonate, sodium vinyl sulphonate, sodium acrylamido propane sulphonic acid.

8. An aqueous dispersion according to Claim 7 wherein the ethylenically singly unsaturated comonomers of c) constitute from 60 to 97.7 % by weight of the stabilising copolymer.

9. An aqueous dispersion according to either Claim 8 wherein the ethylenically singly unsaturated comonomers of c) are selected from the group consisting of hydroxy ethyl acrylate, methoxy poly(oxyethylene)₂₀₀₀ methacrylate, butyl acrylate and methyl methacrylate.

10. An aqueous dispersion according to any one of the preceding Claims wherein the polymer particles are particles of a polymer or copolymer of monomers chosen from the group consisting of butyl acrylate, methyl methacrylate, butyl methacrylate, styrene, 2-ethyl hexyl acrylate, methoxy poly(oxyethylene)₂₀₀₀ methacrylate and allyl methacrylate.

11. A stabilising copolymer as specified in any one of Claims 1 to 10.

12. A process for the preparation of stabilising copolymer according to Claim 11 wherein the monomers are subjected to free radical polymerisation.

13. A process for the preparation of an aqueous dispersion of particles of addition polymer which dispersion contains a stabilising copolymer as specified in any one of the preceding Claims wherein the particles of addition polymer are made by a polymerisation carried out in the presence of the stabilising copolymer.

14. A process according to Claim 13 wherein the stabilising copolymer is at least partially neutralised.

15. A process according to any one of Claims 12 to 14 wherein the polymerisation is initiated by hydrogen peroxide and ascorbic acid.

16. An aqueous coating composition wherein the composition contains the aqueous dispersion as specified in any of Claims 1 to 10.

17. An aqueous coating composition according to Claim 16 wherein the composition contains also at least one component selected from the group consisting of pigments, rheological modifiers, dispersants, extenders, crosslinking agents, anti foams, flow aids and biocides.

18. An adhesive composition containing the aqueous dispersion of Claim 1 wherein said adhesive composition contains also at least one component selected from the group consisting of tackifiers, solvents and plasticisers.

## Patentansprüche

1. Tensidfreie wässrige Dispersion von Teilchen eines Additionspolymers von ethylenisch ungesättigten Monomeren, wobei die Dispersion auch ein stabilisierendes Copolymer aus
a) eine schwache Säure enthaltenden Spezies mit einem pKa von 3 bis 6,
b) mehrfach ungesättigten vernetzenden Spezies und
c) einfach ethylenisch ungesättigten Comonomeren
enthält, wobei das Copolymer wenigstens 0,3 % der vernetzenden Spezies enthält und so ausgewählt ist, dass es einen alpha-Parameter, der abgeleitet ist aus der Mark-Houwink-Gleichung, von 0,3 bis 0,6 aufweist und wobei die Dispersion der Teilchen des Additionspolymers in Gegenwart des stabilisierenden Copolymers hergestellt wird.

2. Wässrige Dispersion nach Anspruch 1 oder 2, wobei das gewichtsmittlere Molekulargewicht des stabilisierenden Copolymers von 25.000 bis 750.000 beträgt.

3. Wässrige Dispersion nach irgendeinem der vorausgehenden Ansprüche, wobei die vernetzenden Spezies gemäß b) vernetzende Comonomere sind, die ausgewählt sind aus Allylmethacrylat, Vinylacrylat, Divinylbenzol, Ethylenglycoldimethacrylat, Diallylphthalat, Hexandioldiacrylat, Trimethylolpropantriacrylat, Pentaerythrittriallylether, Dicyclopentyloxyethylmethacrylat und Glycerintriacrylat.

4. Wässrige Dispersion nach irgendeinem der vorausgehenden Ansprüche, wobei die vernetzenden Spezies gemäß b) vernetzende Comonomere sind, die nur zwei ethylenisch ungesättigte Bindungen enthalten.

5. Wässrige Dispersion nach irgendeinem der vorausgehenden Ansprüche, wobei die Säure enthaltenden Spezies gemäß a) eine Carbonsäuregruppe oder ihr Anhydrid enthalten.

6. Wässrige Dispersion nach irgendeinem der vorausgehenden Ansprüche, wobei die Säure enthaltenden Spezies gemäß a) von 2 bis 30 Gew.-% des stabilisierenden Copolymers bilden.

7. Wässrige Dispersion nach Anspruch 6, wobei die Säure enthaltenden Spezies gemäß a) aus der Gruppe ausgewählt sind, die besteht aus Acrylsäure, Methacrylsäure, Betacarboxyethylacrylat, Itaconsäure, Crotonsäure, Natriumstyrolsulfonat, Natriumvinylsulfonat, Natriumacrylamidopropansulfonsäure.

8. Wässrige Dispersion nach Anspruch 7, wobei die einfach ethylenisch ungesättigten Comonomeren gemäß c) von 60 bis 97,7 Gew.-% des stabilisierenden Copolymers bilden.

9. Wässrige Dispersion nach Anspruch 8, wobei die einfach ethylenisch ungesättigten Comonomeren gemäß c) aus der Gruppe ausgewählt sind, die besteht aus Hydroxyethylacrylat, Methoxypoly(oxyethylen)₂₀₀₀-methacrylat, Butylacrylat und Methylmethacrylat.

10. Wässrige Dispersion nach irgendeinem der vorausgehenden Ansprüche, wobei die Polymerteilchen Teilchen eines Polymers oder eines Copolymers aus Monomeren sind, die ausgewählt aus der Gruppe, die besteht aus Butylacrylat, Methylmethacrylat, Butylmethacrylat, Styrol, 2-Ethylhexylacrylat, Methoxypoly(oxyethylen)₂₀₀₀-methacrylat und Allylmethacrylat.

11. Stabilisierendes Copolymer, wie es in irgendeinem der Ansprüche 1 bis 10 angegeben wird.

12. Verfahren zur Herstellung eines stabilisierenden Copolymers nach Anspruch 11, bei dem die Monomeren einer Polymerisation mit freien Radikalen unterzogen werden.

13. Verfahren zur Herstellung einer wässrigen Dispersion von Teilchen eines Additionspolymers, wobei die Dispersion ein stabilisierendes Copolymer enthält, wie es in irgendeinem der vorausgehenden Ansprüche angegeben wird, wobei die Teilchen des Additionspolymers hergestellt wurden durch eine Polymerisation, die in Gegenwart des stabilisierenden Copolymers durchgeführt wird.

14. Verfahren nach Anspruch 13, wobei das stabilisierende Copolymer wenigstens teilweise neutralisiert ist.

15. Verfahren nach irgendeinem der Ansprüche 12 bis 14, wobei die Polymerisation durch Wasserstoffperoxid und Ascorbinsäure initiiert wird.

16. Wässrige Anstrichzusammensetzung, wobei die Zusammensetzung die wässrige Dispersion enthält, wie sie in irgendeinem der Ansprüche 1 bis 10 angegeben wird.

17. Wässrige Anstrichzusammensetzung nach Anspruch 16, wobei die Zusammensetzung auch wenigstens einen Bestandteil enthält, der aus der Gruppe ausgewählt ist, die besteht aus Pigmenten, Rheologiemodifikatoren, Dispergiermitteln, Extendern, Vernetzungsmitteln, Antischaummitteln, Fließhilfen und Biociden.

18. Klebstoffzusammensetzung, die die wässrige Dispersion von Anspruch 1 enthält, wobei die Klebstoffzusammensetzung auch wenigstens einen Bestandteil enthält, der aus der Gruppe ausgewählt ist, die besteht aus Klebrigmachern, Lösemitteln und Weichmachern.

## Revendications

1. Dispersion aqueuse sans agent tensio-actif de particules d'un polymère d'addition de monomères éthyléniquement insaturés, laquelle dispersion contient un copolymère stabilisant formé de
a) espèces contenant un acide faible ayant un pKa de 3 à 6
b) espèces réticulantes polyinsaturées et
c) comonomères éthyléniquement mono-insaturés
dans laquelle ledit copolymère contient au moins 0,3 % d'espèces réticulantes et est choisi pour avoir un paramètre alpha déduit de l'équation de Mark-Houwink de 0,3 à 0,6, et dans laquelle la dispersion des particules de polymère d'addition est effectuée en présence du copolymère stabilisant.

2. Dispersion aqueuse selon la revendication 1 ou 2, dans laquelle le poids moléculaire moyen en poids du copolymère stabilisant est de 25 000 à 750 000.

3. Dispersion aqueuse selon l'une quelconque des revendications précédentes, dans laquelle les espèces réticulantes de b) sont des comonomères réticulants choisis parmi le méthacrylate d'allyle, l'acrylate de vinyle, le divinylbenzène, le diméthacrylate d'éthylèneglycol, le phtalate de diallyle, le diacrylate d'hexanediol, le triacrylate de triméthylolpropane, l'éther triallylique de pentaérythritol, le méthacrylate de dicyclopentényloxyéthyle et le triacrylate de glycérol.

4. Dispersion aqueuse selon l'une quelconque des revendications précédentes, dans laquelle les espèces réticulantes de b) sont des comonomères réticulants qui ne contiennent que deux liaisons éthyléniquement insaturées.

5. Dispersion aqueuse selon l'une quelconque des revendications précédentes, dans laquelle l'espèce contenant un acide de a) contient un groupe acide carboxylique ou son anhydride.

6. Dispersion aqueuse selon l'une quelconque des revendications précédentes, dans laquelle l'espèce contenant un acide de a) constitue 2 à 30 % en poids du copolymère stabilisant.

7. Dispersion aqueuse selon la revendication 6, dans laquelle les espèces contenant un acide de a) sont choisies dans le groupe formé par l'acide acrylique, l'acide méthacrylique, l'acrylate de bêta-carboxyéthyle, l'acide itaconique, l'acide crotonique, le styrène-sulfonate de sodium, le vinylsulfonate de sodium, le sel de sodium de l'acide acrylamidopropane-sulfonique.

8. Dispersion aqueuse selon la revendication 7, dans laquelle les comonomères éthyléniquement mono-insaturés de c) constituent 60 à 97,7 % en poids du copolymère stabilisant.

9. Dispersion aqueuse selon la revendication 8, dans laquelle les comonomères éthyléniquement mono-insaturés de c) sont choisis dans le groupe formé par l'acrylate d'hydroxyéthyle, le méthacrylate de méthoxypoly(oxyéthylène)₂₀₀₀, l'acrylate de butyle et le méthacrylate de méthyle.

10. Dispersion aqueuse selon l'une quelconque des revendications précédentes, dans laquelle les particules de polymère sont des particules d'un polymère ou copolymère de monomères choisis dans le groupe formé par l'acrylate de butyle, le méthacrylate de méthyle, le méthacrylate de butyle, le styrène, l'acrylate de 2-éthylhexyle, le méthacrylate de méthoxy-poly(oxyéthylène)₂₀₀₀ et le méthacrylate d'allyle.

11. Copolymère stabilisant tel que spécifié dans l'une quelconque des revendications 1 à 10.

12. Procédé pour la préparation d'un copolymère stabilisant selon la revendication 11, dans lequel les monomères sont soumis à une polymérisation radicalaire.

13. Procédé pour la préparation d'une dispersion aqueuse de particules de polymère d'addition, laquelle dispersion contient un copolymère stabilisant tel que spécifié dans l'une quelconque des revendications précédentes, dans lequel les particules du polymère d'addition sont produites par une polymérisation effectuée en présence du copolymère stabilisant.

14. Procédé selon la revendication 13, dans lequel le copolymère stabilisant est au moins partiellement neutralisé.

15. Procédé selon l'une quelconque des revendications 12 à 14, dans lequel la polymérisation est initiée par du peroxyde d'hydrogène et de l'acide ascorbique.

16. Composition de revêtement aqueuse, dans laquelle la composition contient la dispersion aqueuse telle que spécifiée dans l'une quelconque des revendications 1 à 10.

17. Composition de revêtement aqueuse selon la revendication 16, dans laquelle la composition contient également au moins un composant choisi dans le groupe formé par des pigments, des modificateurs rhéologiques, des dispersants, des diluants, des agents réticulants, des agents antimousse, des adjuvants d'écoulement et des biocides.

18. Composition d'adhésif contenant la dispersion aqueuse de la revendication 1, dans laquelle ladite composition d'adhésif contient également au moins un composant choisi dans le groupe formé par des agents d'adhésivité, des solvants et des plastifiants.
